# EUROPEAN PATENT SPECIFICATION

(11) **EP 3 327 846 B1**
(45) Date of publication and mention of the grant of the patent: **13.11.2019**
(21) Application number: 17203428.2
(22) Date of filing: 24.11.2017
(51) Int. Cl.: H01M 8/04828, H01M 8/04955, H01M 8/04089, H01M 8/04223, H01M 8/0438, H01M 8/0444, H01M 8/04537, H01M 8/04664, H01M 8/04746

(54) **FUEL CELL SYSTEM**
BRENNSTOFFZELLENSYSTEM
SYSTÈME DE PILES À COMBUSTIBLE

(30) Priority: 28.11.2016 JP 2016230051
(43) Date of publication of application: 30.05.2018
(73) Proprietor: Panasonic Intellectual Property Management Co., Ltd., Osaka-shi, Osaka 540-6207 (JP)
(72) Inventor: MORITA, Junji, Osaka-shi, Osaka 540-6207 (JP); YUKIMASA, Akinori, Osaka-shi, Osaka 540-6207 (JP); ISE, Takehiko, Osaka-shi, Osaka 540-6207 (JP); ABE, Miki, Osaka-shi, Osaka 540-6207 (JP); USUKI, Yoshito, Osaka-shi, Osaka 540-6207 (JP)
(74) Representative: Grünecker Patent- und Rechtsanwälte PartG mbB

(56) References cited:
- US-A1- 2003 012 989
- US-A1- 2008 096 059
- US-A1- 2017 179 511

## Description

### BACKGROUND

### 1. Technical Field

The present disclosure relates to a fuel cell system and, particularly, to a fuel cell system including a purge valve that discharges an anode off-gas to the outside.

### 2. Description of the Related Art

A polymer electrolyte fuel cell using a polymer electrolyte membrane as an electrolyte generates electricity by electrochemically reacting hydrogen in a fuel gas supplied to an anode with oxygen in air supplied to a cathode. A fuel cell system including such a fuel cell employs a system of a dead-end type, a recycle type, or the like to decrease the supply of hydrogen in order to improve efficiency of generating electricity. For example, with the dead-end type fuel cell, the supply of hydrogen is decreased by closing an outlet of the anode and supplying hydrogen in an amount that is consumed during the electricity generation. In the recycle type fuel cell, it is assumed that the gas discharged from the anode includes unreacted hydrogen, and the discharged gas is supplied to the anode as the fuel gas to thereby decrease the supply of hydrogen.

However, since a channel to the anode is made as a closed circuit, nitrogen remaining from consumption of oxygen in the air during the electricity generation in the cathode sometimes permeates the polymer electrolyte membrane and reaches the anode. In this case, the ratio of a mass of a reacting fuel gas to a mass of a supplied fuel gas (a fuel usage rate) is changed and thus the electricity generation becomes unstable.

In view of this, a fuel cell system described in Japanese Unexamined Patent Application Publication No. 2004-71307 includes a hydrogen circulation channel that recirculates the hydrogen gas discharged from a hydrogen electrode of a fuel cell main body to supply the discharged hydrogen gas to the hydrogen electrode again, and a hydrogen electrode purge valve that is provided at an outlet side of the hydrogen electrode and discharges hydrogen to the outside. When a predetermined time has elapsed from previous purge and reaches a next purge cycle, the hydrogen electrode purge valve is fully opened to perform hydrogen electrode purge, and thus the hydrogen including impurities in the hydrogen electrode and water droplets in a gas passage in the hydrogen electrode are discharged from the hydrogen electrode.

A fuel cell system described in Japanese Unexamined Patent Application Publication No. 2006-156282 includes a fuel gas circulation channel that supplies a fuel gas discharged from a fuel cell stack to the fuel cell stack again, and a purge valve that discharges the fuel gas in the fuel gas circulation channel to the outside. When the fuel cell stack generates electricity for a certain time or until a certain amount of the electricity is generated, or when decrease of a cell voltage due to clogging or the like is detected, the purge valve is opened to discharge moisture and nitrogen with a hydrogen gas to the outside of the apparatus. When a closing failure of the purge valve is detected, a flow rate of the fuel gas circulating through the fuel gas circulation channel is increased to diffuse the nitrogen in the hydrogen electrode that increases as a result of the closing failure of the purge valve. With this, deterioration of the cell of the fuel cell stack due to the nitrogen is prevented. US 2008/096059 A1 relates to a fuel cell system and a method of controlling the system.

### SUMMARY

However, in either of the above-described Japanese Unexamined Patent Application Publication Nos. 2004-71307 and 2006-156282, there is no description about recovery in the case where a purge operation has not been performed normally because of clogging with a foreign substance such as moisture and wastes. Thus, there is still a room for improvement in light of recovering from the abnormal purge operation.

One non-limiting and exemplary embodiment provides a fuel cell system capable of recovering a purge operation.

A fuel cell system according to the present invention is defined in claim 1.

The present invention achieves an effect that makes it possible to recover a purge operation in a fuel cell system. Further advantageous embodiments are defined in the dependent claims.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a block diagram schematically illustrating a configuration of a fuel cell system according to a first embodiment of the present disclosure;
Fig. 2 is a flowchart illustrating an example of a method of operating the fuel cell system in Fig. 1;
Fig. 3 is a block diagram schematically illustrating a configuration of a fuel cell system according to a first modification of the first embodiment of the present disclosure;
Fig. 4 is a block diagram schematically illustrating a configuration of a fuel cell system according to a second modification of the first embodiment of the present disclosure;
Fig. 5 is a flowchart illustrating an example of a method of operating a fuel cell system according to a second embodiment of the present disclosure;
Fig. 6 is a flowchart illustrating an example of a method of operating a fuel cell system according to a third embodiment of the present disclosure;
Fig. 7 is a flowchart illustrating an example of a method of operating a fuel cell system according to a modification of the third embodiment of the present disclosure;
Fig. 8 is a flowchart illustrating an example of a method of operating a fuel cell system according to a fourth embodiment of the present disclosure; and
Fig. 9 is a flowchart illustrating an example of a method of operating a fuel cell system according to a modification of the fourth embodiment of the present disclosure.

### DETAILED DESCRIPTION

### (Underlying Knowledge Forming Basis of the Present Disclosure)

The inventors diligently perform research in recovery from an abnormal purge operation in a fuel cell system. As a result, the inventors found problems described below in the techniques of the related art.

In the fuel cell systems of both Japanese Unexamined Patent Application Publication Nos. 2004-71307 and 2006-156282, the valve is opened regularly or when, for example, decrease of a voltage is detected, to discharge water droplets, nitrogen, and the like to the outside. However, when a discharge channel, a valve, and the like are clogged with a foreign substance such as water droplets or wastes, there may be a case that the foreign substance cannot be removed only by opening the valve, and thus a purge operation cannot be performed normally.

In this case, a difference between pressure on the outside and pressure on the inside of the valve is increased to be a large pressure difference that allows the foreign substances to be blown off and removed from the discharge channel or the purge valve. However, since the outside of the purge valve is usually opened to air, it is unable to change the pressure outside the purge valve. Meanwhile, increasing a pressure of the fuel gas supplied to the fuel cell allows a pressure of the discharge channel located inside the purge valve to be increased. However, in light of a pressure, cost, a configuration, and the like of a fuel gas supply source, there may be a case where a supply pressure of the fuel gas is constant and thus it is unable to change the pressure inside the purge valve. In this case, the foreign substance cannot be removed and thus it is unable to recover the purge operation.

The fuel cell system of Japanese Unexamined Patent Application Publication No. 2006-156282 increases the flow rate of the fuel gas circulating through the fuel gas circulation channel, when the failure of closing the purge valve is detected. In this case, the flow rate of the fuel gas supplied to the fuel cell stack is increased, and pressure loss in the fuel cell stack is accordingly increased; that is, the pressure of gas exhausted from the fuel cell stack is decreased. With this, the pressure inside the purge valve is decreased and thus it is unable to blow off the foreign substance to the outside of the purge valve. Hence, the purge operation cannot be recovered by this way either.

Given the circumstances, the inventors found that the purge operation can be recovered by performing an operation (decreasing operation) to decrease the flow rate of the fuel gas supplied to an anode. The present disclosure is made based on this finding.

### (Embodiments)

A fuel cell system according to a first aspect of the present disclosure is defined in claim 1. As one example, abnormal means a case where the purge operation has not completed.

According to this configuration, decreasing the flow rate of the fuel gas supplied to the anode reduces a pressure loss of the fuel gas flowing through the flow channel of the anode. When a pressure of the fuel gas supplied to the anode is adjusted to be constant, a pressure of the anode off-gas discharged from the flow channel of the anode is increased. With this, the pressure of the anode off-gas on the upstream side of clogging in the discharge channel, the purge valve, and the like due to a foreign substance is increased, and thus a difference between a pressure on the upstream side and a pressure on a downstream side is increased. This increased pressure difference makes it possible to remove the foreign substance and recover from the abnormal purge operation because of the clogging due to the foreign substance.

The fuel cell system according to a second aspect of the present disclosure in the first aspect may include the decreasing operation that includes an operation to decrease a flow rate of the anode off-gas flowing through the recycle channel by using the circulation pump. According to this configuration, since the flow rate of the fuel gas supplied to the anode is decreased in accordance with the decrease of the flow rate of the anode off-gas, the pressure loss of the fuel gas flowing through the flow channel of the anode is decreased. The pressure difference is thus increased, and this makes it possible to remove the foreign substance and recover from the abnormal purge operation because of the clogging due to the foreign substance.

The fuel cell system according to a third aspect of the present disclosure in the first aspect may include the decreasing operation that includes an operation to decrease an amount of the electricity generated in the fuel cell. According to this configuration, decreasing the amount of the electricity generated in the fuel cell decreases the flow rate of the fuel gas supplied to the anode through the supply channel. This reduces the pressure loss of the fuel gas flowing through the flow channel of the anode. The pressure difference is thus increased, and this makes it possible to remove the foreign substance and recover from the abnormal purge operation because of the clogging due to the foreign substance.

The fuel cell system according to a fourth aspect of the present disclosure in any one of the first to third aspects may include the controller that, when the purge operation is determined to be abnormal, performs the decreasing operation after a flow rate of the fuel gas supplied to the fuel cell is increased. According to this configuration, when the flow rate of the fuel gas supplied to the anode is decreased by the decreasing operation, increasing the flow rate of the fuel gas allows the pressure difference between the upstream side and the downstream side of the clogging due to the foreign substance to be further increased. This increased pressure difference makes it possible to remove the foreign substance more reliably and recover the purge operation.

The fuel cell system according to a fifth aspect of the present disclosure in any one of the first to fourth aspects may include the controller that, when the purge operation is determined to be abnormal after the decreasing operation is performed, stops the fuel cell system. According to this configuration, when the purge operation is abnormal because of some cause other than the clogging due to the foreign substance, such as failure of the purge valve, it is possible to perform an appropriate action in response to the cause while the fuel cell system is stopped.

The fuel cell system according to a sixth aspect of the present disclosure in any one of the first to fifth aspects may further include a voltage detector that detects a voltage of the generated electricity in the fuel cell, and the controller may determine that the purge operation is abnormal when the voltage of the generated electricity during the purge operation is below a predetermined voltage. According to this configuration, when the purge operation is normal, the anode off-gas is discharged, the hydrogen concentration is increased, and the voltage of the generated electricity is increased. When an increase in the voltage of the generated electricity is not detected, the purge operation is determined to be abnormal.

The fuel cell system according to a seventh aspect of the present disclosure in any one of the first to fifth aspects may further include a flow rate detector that detects at least one of the flow rate of the fuel gas flowing through the supply channel and a flow rate of the anode off-gas flowing through the discharge channel, and the controller may determine that the purge operation is abnormal when the flow rate during the purge operation is below a predetermined flow rate. According to this configuration, when the purge operation is normal, the anode off-gas is discharged and the fuel gas is supplied from the supply channel in order to compensate for the anode off-gas. When an increase in the supplying flow rate of the fuel gas is not detected, the purge operation is determined to be abnormal.

The fuel cell system according to an eighth aspect of the present disclosure in any one of the first to fifth aspects may further include a concentration detector that detects hydrogen concentration of the anode off-gas discharged to the outside while the fuel gas contains hydrogen, and the controller may determine that the purge operation is abnormal when the hydrogen concentration during the purge operation is below a predetermined concentration. According to this configuration, when the purge operation is normal, the anode off-gas containing hydrogen is discharged to the outside. When hydrogen contained in the anode off-gas is not detected, the purge operation is determined to be abnormal.

The fuel cell system according to the first aspect of the present disclosure further includes a pressure adjuster that adjusts a pressure of the fuel gas flowing through the supply channel to be constant. According to this configuration, the fuel gas can be supplied to the fuel cell with an appropriate pressure corresponding to the pressure loss of the fuel cell.

The fuel cell system according to a ninth aspect of the present disclosure in the first aspect may include the pressure adjuster that is a governor. According to this configuration, the governor can supply the fuel cell with a constant pressure.

Details of embodiments of the present disclosure are described below with reference to the drawings. Note that, the elements that are the same or corresponding to each other through all of the drawings are denoted by the same reference signs, and their duplicate descriptions are omitted.

### (First Embodiment)

### [Configuration of Apparatus]

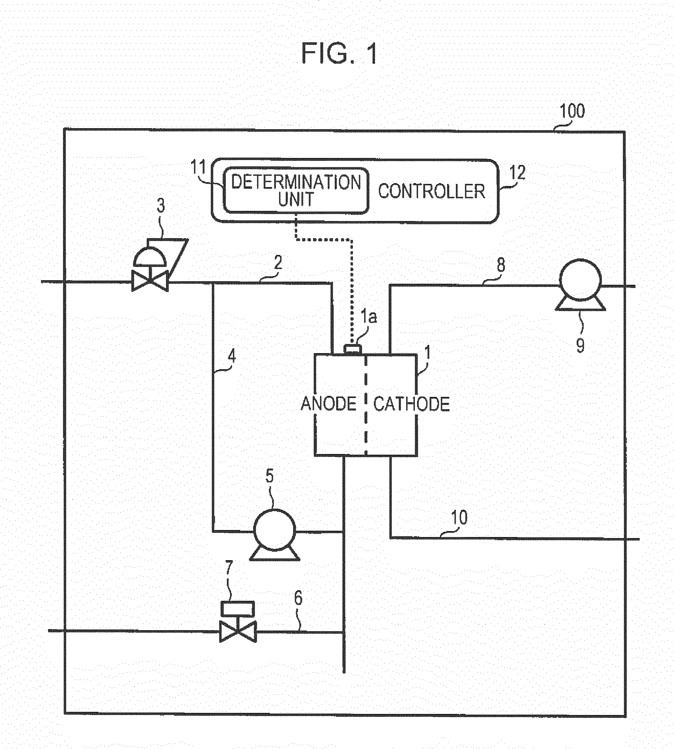

First, a configuration of a fuel cell system 100 according to a first embodiment is described with reference to Fig. 1. The fuel cell system 100 includes a fuel cell 1 that generates electricity by an electrochemical reaction of a fuel gas supplied to an anode with an oxidant gas supplied to a cathode, a supply channel (a first supply channel) 2 that supplies the fuel gas to the anode, a supply channel (a second supply channel) 8 that supplies the oxidant gas to the cathode, and a controller 12 that controls the units.

The fuel cell system 100 includes a discharge channel (a first discharge channel) 6 that discharges an anode off-gas discharged from the anode to the outside and a discharge channel (a second discharge channel) 10 through which a cathode off-gas discharged from the cathode flows. The fuel cell 1 uses hydrogen in the fuel gas to generate electricity. Since the anode off-gas discharged from the fuel cell 1 still contains hydrogen, the anode off-gas can be recycled as the fuel gas. Thus, the fuel cell system 100 includes a recycle channel 4 that supplies the anode off-gas to the first supply channel 2.

In this way, the fuel gas supplied to the anode of the fuel cell 1 includes the fuel gas supplied through the first supply channel 2 and the anode off-gas supplied as the fuel gas through the recycle channel 4.

The fuel cell 1 has a laminate of a membrane electrode assembly (MEA), and the MEA includes an electrolyte that uses a polymer electrolyte membrane sandwiched between the anode and the cathode. Each of the anode and the cathode includes a catalyst layer made of carbon particles supporting noble metal catalysts such as platinum, and a gas diffusion layer made of carbon paper or carbon felt.

The MEA is sandwiched between a pair of separators. A first channel is provided between one separator and the anode while a second channel is provided between the other separator and the cathode. The anode is supplied with the fuel gas through the first channel while the cathode is supplied with the oxidant gas through the second channel. The electrochemical reaction of the fuel gas with the oxidant gas thus occurs, thereby generating electricity. A voltage detector 1a that detects a voltage of the generated electricity is provided in the fuel cell 1 and the voltage detector 1a outputs the detected value to the controller 12.

The first supply channel 2 is connected to a fuel gas supply source (not illustrated) and an inlet of the first channel of the fuel cell 1. The fuel gas is supplied to the anode from the fuel gas supply source through the first supply channel 2 and the first channel. The fuel gas is hydrogen or a gas containing hydrogen. As the fuel gas, for example, hydrogen obtained through water electrolysis or the like, and a reformed gas obtained by a reforming reaction of a raw gas, such as city gas, using a reformer are used. As the first supply channel 2, since the fuel gas flowing through inside thereof is a combustible gas, a pipe made of a noncombustible material (e.g., a metal pipe such as a stainless pipe) is generally used. A flow rate of the fuel gas supplied through the first supply channel 2 is adjusted in accordance with an amount of the electricity generated in the fuel cell 1. The first supply channel 2 may be provided with a humidifier in order to humidify the fuel gas.

A pressure of the fuel gas supplied from the fuel gas supply source through the first supply channel 2 is set to be constant based on a pressure loss of the fuel gas flowing through the first channel of the fuel cell 1. For example, the fuel gas supply source is a reformer to which the raw gas, such as city gas, is supplied from a raw gas supply source. In this case, since a pressure of the raw gas supplied from the raw gas supply source to the reformer is low, a pressure of the fuel gas supplied from the reformer through the first supply channel 2 is low. This may cause a primary pressure of the fuel gas to be lower than the magnitude of the pressure loss of the fuel gas flowing through the first channel. In this case, a booster is provided in the first supply channel 2 to raise the pressure of the fuel gas, and the boosted fuel gas is supplied to the first channel.

On the other hand, for example, when the fuel gas supply source is a hydrogen tank or the like, the pressure of the fuel gas supplied from the fuel gas supply source is high, and this may cause the primary pressure of the fuel gas supplied to the first channel to be higher than the magnitude of the pressure loss of the fuel gas flowing through the first channel. In this case, a pressure adjuster 3 is provided in the first supply channel 2 to adjust the pressure of the fuel gas to a predetermined pressure higher than the pressure loss, and the adjusted gas is supplied to the first channel. Note that a case of using the pressure adjuster 3 is described herein and there is no description for a case of using the booster since the same control operations described below are also performed in the case of using the booster.

The pressure adjuster 3 is a machine that adjusts the pressure of the fuel gas flowing through the first supply channel 2 and includes, for example, a driven type pressure adjustment valve and a regulator that are capable of varying a pressure, as well as a governor that adjusts a pressure to a constant value. This makes it possible to keep the pressure of the fuel gas supplied from the fuel gas supply source to the first channel of the fuel cell 1 constant.

The second supply channel 8 is connected to an oxidant gas supplier 9 and an inlet of the second channel of the fuel cell 1. The oxidant gas is supplied to the cathode from the oxidant gas supplier 9 through the second supply channel 8 and the second channel. As the oxidant gas, for example, air can be used. When using the air as the oxidant gas, the oxidant gas supplier 9 may include, for example, a compressor, an electromagnetic guidance type diaphragm pump, and the like. Thus, a pressure of the oxidant gas is raised by the oxidant gas supplier 9, and the boosted oxidant gas is supplied to the second channel of the fuel cell 1. The second supply channel 8 may be provided with a humidifier (not illustrated) in order to humidify the oxidant gas.

The recycle channel 4 connects an outlet of the first channel of the fuel cell 1 and the first supply channel 2. The first supply channel 2 on downstream of a point connected with the recycle channel 4, the first channel, and the recycle channel 4 make a channel through which the anode off-gas flowing out from the anode circulates. Thus, the anode off-gas discharged from the outlet of the first channel is circulated, and the anode off-gas is mixed with the fuel gas supplied through the first supply channel 2. Then, the mixed gas is supplied to the inlet of the first channel again as the fuel gas. As the recycle channel 4, since the anode off-gas flowing through inside thereof is a combustible gas, a pipe made of a noncombustible material (e.g., a metal pipe such as a stainless pipe) is generally used. The recycle channel 4 is provided with a circulation pump 5.

The circulation pump 5 is a booster pump that controls a flow rate of the anode off-gas in the recycle channel 4 in order to allow the anode off-gas flowing out from the outlet of the first channel to flow into the inlet of the first channel. As the circulation pump 5, for example, an electromagnetic guidance type diaphragm pump capable of controlling the flow rate of the anode off-gas by using an input voltage is used. Due to the pressure loss in the first channel, the pressure of the anode off-gas flowing through the recycle channel 4 becomes lower than the pressure of the fuel gas flowing through the first supply channel 2. This makes it impossible to allow the anode off-gas to flow into the first supply channel 2 through the recycle channel 4. Thus, using the circulation pump 5, the pressure of the anode off-gas in the recycle channel 4 is raised in order to allow the anode off-gas to flow into the first supply channel 2.

The first discharge channel 6 is connected to the recycle channel 4 between the anode and the circulation pump 5 and extends to the outside of the fuel cell system 100. In other words, the first discharge channel 6 is connected to the recycle channel 4 on an upstream side of the circulation pump 5 and extends to the outside of the fuel cell system 100. As the first discharge channel 6, since the anode off-gas flowing through inside thereof is a combustible gas, a pipe made of a noncombustible material (e.g., a metal pipe such as a stainless pipe) is generally used. The first discharge channel 6 is provided with a purge valve 7. As the purge valve 7, for example, a solenoid electromagnetic valve is used. By opening the purge valve 7 to bring it into the open state, the anode off-gas flowing through the recycle channel 4 is discharged to the outside through the first discharge channel 6 and the purge valve 7.

The second discharge channel 10 is connected to an outlet of the second channel of the fuel cell 1 and discharges the cathode off-gas discharged from the second channel. For example, the cathode off-gas contains moisture when a humidifier is provided in the second supply channel 8. The cathode off-gas contains also the moisture that is generated during the electricity generation in the fuel cell 1. Thus, as the second discharge channel 10, a pipe that is unlikely to be corroded by the moisture (e.g., a stainless pipe or a resin pipe made of crosslinked polyethylene) is used.

The controller 12 includes a computing unit such as a CPU (not illustrated), and a storing unit such as a ROM and a RAM (not illustrated). The storing unit stores information such as a basic program, various fixed data, and the like of the fuel cell system 100. The computing unit reads software of the basic program and the like and executes them. In this way, the controller 12 controls operations of the units. The controller 12 may be structured as a single controller 12 that performs centralized control, or may be structured as multiple controllers 12 that perform decentralized control while associating with each other.

The controller 12 includes a determination unit 11 that determines whether the purge operation for discharging the anode off-gas to the outside is abnormal. For example, the determination unit 11 determines that the purge operation is abnormal when the voltage of the generated electricity during the purge operation is below a predetermined voltage. Then, when the determination unit determines that the purge operation is abnormal, the controller 12 performs an operation for decreasing the flow rate of the fuel gas supplied to the anode. The determination unit 11 is provided as one function in the controller 12.

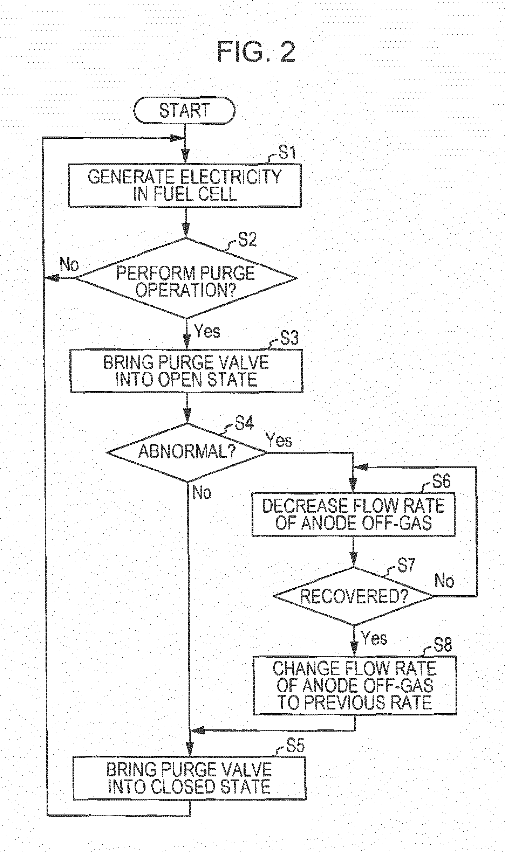

Next, an operation method of the fuel cell system 100 is described with reference to Fig. 2. This operation method is controlled by the controller 12. A case of using the air as the oxidant gas is described herein.

First, the controller 12 controls the purge valve 7 to close the purge valve 7 to be in the closed state. Then, the flow rate of the anode off-gas and the flow rate of the fuel gas are controlled in order to supply to the fuel cell 1 the fuel gas of the flow rate corresponding to the amount of the electricity generated in the fuel cell 1. As a result, the fuel gas is supplied to the anode of the fuel cell 1, and thus the electricity is generated in the fuel cell 1 by the electrochemical reaction of the fuel gas with the air supplied to the cathode (step S1).

It is known that, during the electricity generation, nitrogen in the air permeates from the cathode through the polymer electrolyte membrane and reaches the anode due to a partial pressure difference of the nitrogen, and thus the nitrogen is mixed into the anode off-gas. When the anode off-gas is circulated, the permeated nitrogen is cumulatively present in the anode off-gas, and this decreases the hydrogen concentration in the anode off-gas. Since the hydrogen concentration in the fuel gas containing the anode off-gas is accordingly decreased, the hydrogen concentration required for the electricity generation in the fuel cell 1 cannot be maintained, and thus the voltage is decreased.

In view of this, the determination unit 11 of the controller 12 determines whether to perform the purge operation (step S2). For example, the determination unit 11 monitors the voltage of the generated electricity in the operating fuel cell 1 based on the detected value obtained by the voltage detector 1a. When the voltage of the generated electricity becomes lower than the voltage that is recovered by a previous purge operation and reaches a first predetermined voltage, the hydrogen concentration is considered to be decreased, and thus the determination unit 11 determines to perform the purge operation (step S2: YES). Note that the first predetermined voltage is set based on a relation between the fuel usage rate that is obtained in advance and the voltage of the generated electricity. The determination unit 11 may determine to perform the purge operation when a predetermined time is passed from the previous purge operation and the hydrogen concentration is considered to be decreased. The predetermined time is obtained in advance from an experiment and the like.

On the other hand, when the determination unit 11 does not determine to perform the purge operation (step S2: NO), the procedure returns to the process in step S1, and the electricity generation in the fuel cell 1 is continued. In the case where the purge operation is to be performed (step S2: YES), the controller 12 brings the purge valve 7 into the open state to execute the purge operation (step S3).

In the purge operation, the anode off-gas is discharged from the recycle channel 4 to the outside through the first discharge channel 6 and the purge valve 7, and the anode off-gas supplied to the fuel cell 1 is decreased. This increases the proportion of the fuel gas supplied from the first supply channel 2 out of the fuel gas supplied to the fuel cell 1, and the hydrogen concentration in the fuel gas supplied to the fuel cell 1 is accordingly increased. When the voltage of the generated electricity that is detected by the voltage detector 1a is increased in accordance with the increase of the hydrogen concentration, and once the voltage of the generated electricity reaches a second predetermined voltage, the determination unit 11 determines that the purge operation is normal (step S4: NO). The second predetermined voltage is set to, for example, a voltage that can continue the electricity generation in accordance with the hydrogen concentration in the fuel gas supplied to the fuel cell 1. Then, the controller 12 brings the purge valve 7 into the closed state to end the purge operation (step S5) and continues the electricity generation (step S1).

Meanwhile, when the first discharge channel 6 or the purge valve 7 is clogged with a foreign substance, no anode off-gas is discharged to the outside. This causes the hydrogen concentration in the fuel gas supplied to the fuel cell 1 to be continuously decreased, and accordingly the voltage of the generated electricity is continuously decreased. For example, when a predetermined condition is met such that the voltage of the generated electricity does not reach the second predetermined voltage even when the predetermined time is passed from the purge operation, or the voltage of the generated electricity reaches a third predetermined voltage that is lower than the second predetermined voltage, the determination unit 11 determines that the purge operation is abnormal (step S4: YES). The controller 12 may store I-V data of a case of normal purge in advance, and a voltage value for the recovery may be set to the second predetermined voltage based on the I-V data and a current at the purge operation. In this case, the purge operation may be determined that it is abnormal when the voltage of the generated electricity is below the second predetermined voltage.

The controller 12 starts an operation (decreasing operation). In this operation, the circulation pump 5 decreases the flow rate of the anode off-gas flowing through the recycle channel 4 (step S6).

Specifically, decreasing the input voltage of the circulation pump 5 by the controller 12 decreases the flow rate of the anode off-gas flowing through the recycle channel 4. In this case, the flow rate of the anode off-gas is controlled in order to supply to the fuel cell 1 the fuel gas of the flow rate corresponding to the amount of the electricity generated in the fuel cell 1. However, since there is a range in the flow rate of the fuel gas corresponding to the amount of the electricity generated in the fuel cell 1, the flow rate of the anode off-gas is decreased to the flow rate equal to or more than the minimum flow rate of that flow rate range. In this way, the flow rate of the anode off-gas can be decreased while preventing deterioration of the fuel cell 1 due to a lack of the fuel gas.

As described above, when the flow rate of the fuel gas supplied to the fuel cell 1 is decreased, the pressure loss of the fuel gas flowing through the first channel of the fuel cell 1 is reduced. At this time, since the pressure adjuster 3 keeps a supply pressure of the fuel gas to a constant value, the pressure of the anode off-gas discharged from the first channel to the first discharge channel 6 because of the reduction of the pressure loss becomes higher than the pressure before the decreasing operation. In addition, since the purge valve 7 is in the open state, the pressure on downstream of the foreign substance clogging the first discharge channel 6 or the purge valve 7 is equal to the pressure of the outside (e.g., the atmospheric pressure). As a result, the pressure on the upstream side of the foreign substance clogging the first discharge channel 6 or the purge valve 7 becomes higher than the pressure on downstream thereof, and this large pressure difference makes it possible to blow off and remove the foreign substance.

The controller 11 determines whether the clogging due to the foreign substance is solved by the decreasing operation and the purge operation is recovered (step S7). Since no anode off-gas is discharged to the outside until the clogging is solved, and thus the voltage of the generated electricity is decreased and does not reach the second predetermined voltage, the determination unit 11 determines that the purge operation is not recovered yet (step S7: NO), and the decreasing operation is continued (steps S6 and S7).

On the other hand, when the clogging is solved, since the anode off-gas is discharged to the outside through the first discharged channel 6 and the purge valve 7, the voltage of the generated electricity reaches the second predetermined voltage, and the determination unit 11 determines that the purge operation is recovered (step S7: YES). Then, the flow rate of the anode off-gas flowing through the recycle channel 4 by using the circulation pump 5 is returned to the flow rate before the decreasing operation (step S8), and the decreasing operation is end. Thereafter, the controller 12 brings the purge valve 7 into the closed state to end the purge operation (step S5). The procedure returns to the process in step S1.

According to the above embodiment, even in the fuel cell system 100 in which the pressure of the fuel gas supplied to the fuel cell 1 cannot be increased and the flow rate of the fuel gas supplied from the first supply channel 2 is adjusted based on the amount of the electricity generated in the fuel cell 1, it is possible to remove the foreign substance by decreasing the flow rate of the fuel gas and increasing the pressure of the first discharge channel 6. This makes it possible to recover the purge operation, which is abnormal because of the foreign substance.

### (First Modification of First Embodiment)

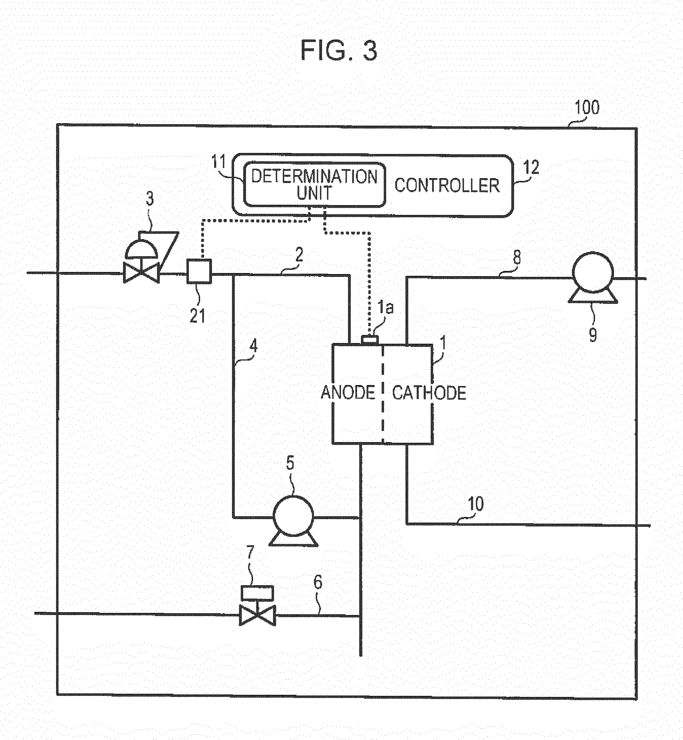

Next, a configuration of the fuel cell system 100 according to a first modification of the first embodiment is described with reference to Fig. 3. The fuel cell system 100 of the first modification further includes a flow rate detector 21 provided in the first supply channel 2. The determination unit 11 determines that the purge operation is abnormal when the flow rate during the purge operation is below a predetermined flow rate. Other configurations, workings, and effects are the same as those of the fuel cell system 100 illustrated in Fig. 1; thus, descriptions thereof are omitted.

The flow rate detector 21 is provided in the first supply channel 2 on the upstream side of the point connected with the recycle channel 4. The flow rate detector 21 detects the flow rate of the fuel gas before being mixed with the anode off-gas in the recycle channel 4 and outputs the detected value to the controller 12. As the flow rate detector, for example, a flow rate sensor provided with a heat type MEMS (micro-electro-mechanical system)is used.

Next, a method of operating this fuel cell system 100 is described with reference to Fig. 2. In the fuel cell system 100 of Fig. 3, the processes other than those in steps S4 and S7 in the flowchart of Fig. 2 are the same as those in the method of operating the fuel cell system 100 of Fig. 1; thus, descriptions thereof are omitted.

In step S3, when the purge valve 7 is in the open state to perform the purge operation and the purge operation is normal, the anode off-gas is discharged from the first discharge channel 6 to the outside and does not return to the first supply channel 2. In order to compensate for this anode off-gas, the flow rate of the fuel gas supplied to the fuel cell 1 through the first supply channel 2 is increased. Thus, when the increased flow rate of the fuel gas detected by the flow rate detector reaches the predetermined flow rate, the determination unit 11 determines that the purge operation is normal (step S4: NO).

On the other hand, when the first discharge channel 6 and the purge valve 7 are clogged with the foreign substance, no anode off-gas is discharged to the outside. Thus, for example, when the flow rate detected by the flow rate detector does not reach the predetermined flow rate after the predetermined time is passed from the purge operation, the determination unit 11 determines that the purge operation is abnormal (step S4: YES).

When the operation in step S6 is performed and the foreign substance is removed, the anode off-gas is discharged to the outside. With this, when the flow rate detected by the flow rate detector reaches the predetermined flow rate, the determination unit 11 determines that the purge operation is recovered (step S7: YES).

In the fuel cell system 100 illustrated in Fig. 3, the flow rate detector is provided in the first supply channel 2 on the upstream side of the point connected with the recycle channel 4; however, the position of the flow rate detector is not limited thereto. For example, a flow rate detector that detects the flow rate of the anode off-gas through the recycle channel 4 may be provided in the recycle channel 4. In this case, when the purge operation is normal, the anode off-gas is discharged from the first discharge channel 6 to the outside, and the flow rate of the anode off-gas through the recycle channel 4 is decreased, thereby reaching the predetermined flow rate (below the predetermined flow rate). Thus, the determination unit 11 can determine that the purge operation is normal (step S4: NO), or that the purge operation is recovered (step S7: YES). On the other hand, when the purge operation is abnormal, no anode off-gas is discharged from the first discharge channel 6 to the outside, and the flow rate of the anode off-gas through the recycle channel 4 does not reach the predetermined flow rate (greater than the predetermined flow rate). Thus, the determination unit 11 determines that the purge operation is abnormal (step S4: YES), or that the purge operation is not recovered (step S7: NO).

A flow rate detector that detects the flow rate of the anode off-gas through the first discharge channel 6 may be provided in the first discharge channel 6. In this case, when the purge operation is normal, the anode off-gas is discharged from the first discharge channel 6 to the outside, and the flow rate of the anode off-gas through the first discharge channel 6 is increased, thereby reaching the predetermined flow rate (equal to or greater than the predetermined flow rate). Thus, the determination unit 11 determines that the purge operation is normal (step S4: NO), or that the purge operation is recovered (step S7: YES).

On the other hand, when the purge operation is abnormal, no anode off-gas is discharged from the first discharge channel 6 to the outside, and the flow rate of the anode off-gas through the first discharge channel 6 does not reach the predetermined flow rate (below the predetermined flow rate). Thus, the determination unit 11 determines that the purge operation is abnormal (step S4: YES), or that the purge operation is not recovered (step S7: NO).

### (Second Modification of First Embodiment)

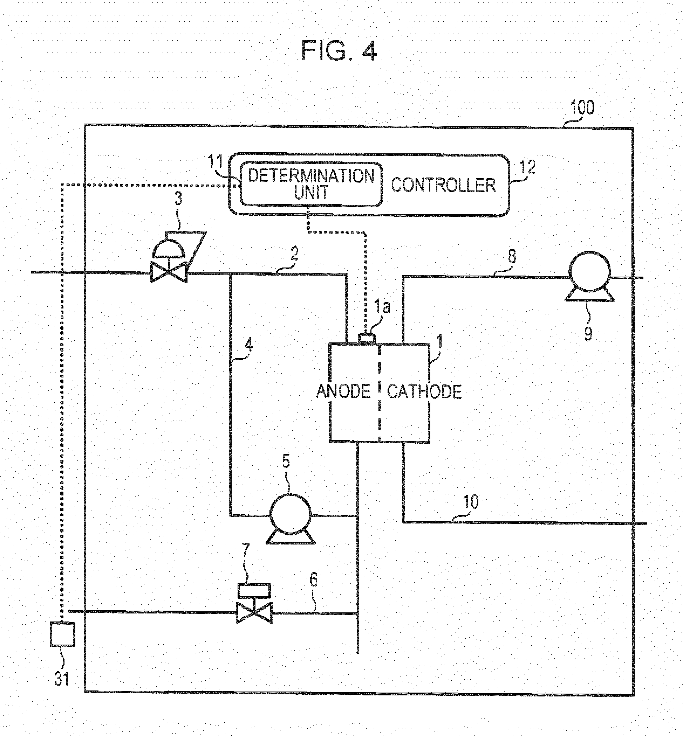

Next, a configuration of the fuel cell system 100 according to a second modification of the first embodiment is described with reference to Fig. 4. The fuel cell system 100 of the second modification further includes a concentration detector 31. The determination unit 11 determines that the purge operation is abnormal when the hydrogen concentration during the purge operation is below a predetermined concentration. Other configurations, workings, and effects are the same as those of the fuel cell system 100 illustrated in Fig. 1; thus, descriptions thereof are omitted.

The concentration detector 31 is provided outside of the fuel cell system 100 and, specifically, arranged in the outlet of the first discharge channel 6 or a vicinity thereof. The concentration detector 31 detects the hydrogen concentration of the anode off-gas discharged to the outside through the first discharge channel 6 and outputs the detected value to the controller 12. As the concentration detector 31, for example, a combustion type concentration detector or a semiconductor concentration detector is used.

Next, a method of operating this fuel cell system 100 is described with reference to Fig. 2. In the fuel cell system 100 of Fig. 4, the processes other than those in steps S4 and S7 in the flowchart of Fig. 2 are the same as those in the method of operating the fuel cell system 100 of Fig. 1; thus, descriptions thereof are omitted.

In step S3, when the purge valve 7 is in the open state to perform the purge operation and the purge operation is normal, the anode off-gas is discharged from the first discharge channel 6 to the outside. When the hydrogen concentration detected by the concentration detector 31 is increased and reaches the predetermined concentration because of the hydrogen contained in the anode off-gas, the determination unit 11 determines that the purge operation is normal (step S4: NO).

On the other hand, when the first discharge channel 6 and the purge valve 7 are clogged with the foreign substance, no anode off-gas is discharged to the outside. Thus, for example, when the concentration detected by the concentration detector 31 does not reach the predetermined concentration after a predetermined time is passed from the purge operation, the determination unit 11 determines that the purge operation is abnormal (step S4: YES).

When the operation in step S6 is performed and the foreign substance is removed, the anode off-gas is discharged to the outside. With this, when the concentration detected by the concentration detector 31 reaches the predetermined concentration, the determination unit 11 determines that the purge operation is recovered (step S7: YES).

### (Second Embodiment)

In the fuel cell system 100 according to the first embodiment, during the operation of the fuel cell system 100, the flow rate of the anode off-gas flowing through the recycle channel 4 by using the circulation pump 5 is decreased in order to decrease the flow rate of the fuel gas supplied to the anode. On the other hand, in the fuel cell system 100 according to a second embodiment, during the operation of the fuel cell system 100, the amount of the electricity generated in the fuel cell 1 is decreased in order to decrease the flow rate of the fuel gas supplied to the anode. Other configurations, workings, and effects of the fuel cell system 100 according to the second embodiment are the same as those of the fuel cell system 100 according to the first embodiment; thus, descriptions thereof are omitted.

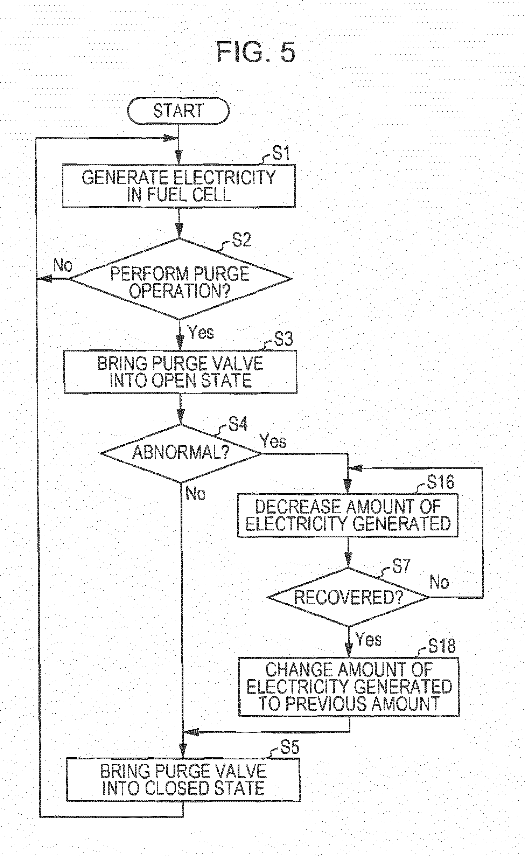

Next, a method of operating this fuel cell system 100 is described with reference to Fig. 5. In the operation method illustrated in the flowchart of the Fig. 5, a process of step S16 is performed instead of that of step S6 in the flowchart of Fig. 2, and a process of step S18 is performed instead of that of step S8 in the flowchart of Fig. 2. Other processes are the same as those in Fig. 2; thus, descriptions thereof are omitted.

In the process of step S4, when the purge operation is determined to be abnormal (step S4: YES), the controller 12 starts an operation (decreasing operation). In this decreasing operation, the amount of the electricity generated in the fuel cell 1 is decreased (step S16).

Specifically, when the amount of the electricity generated in the fuel cell 1 is decreased, the flow rate of the fuel gas supplied from the fuel gas supply source through the first supply channel 2, that is, the flow rate of the fuel gas supplied to the first channel of the fuel cell 1, is decreased. With this, the pressure loss of the fuel gas in the first channel of the fuel cell 1 is reduced, and thus the pressure of the anode off-gas discharged from the first channel to the first discharge channel 6 is increased. A difference between the pressure of the anode off-gas in the first discharge channel 6 on the upstream side of the clogging due to the foreign substance and the outside pressure or the pressure of the anode off-gas in the first discharge channel 6 on downstream becomes large. This blows off the foreign substance, and the clogging due to the foreign substance can be solved.

In this way, the anode off-gas is discharged from the purge valve 7 to the outside, and the voltage of the generated electricity is raised. When the voltage of the generated electricity reaches the second predetermined voltage, the purge operation is determined to be recovered (step S7: YES). Thus, the controller 12 changes the amount of the electricity generated in the fuel cell 1 to that before the decrease (step S18) and ends the decreasing operation.

The fuel cell system 100 according to the second embodiment may further include the flow rate detector 21 like the fuel cell system 100 according to the first modification of the first embodiment does. This flow rate detector may be provided in one of the first supply channel 2 on the upstream side of the point connected with the recycle channel 4, and the first discharge channel 6. In this case, the determination unit 11 determines that the purge operation is abnormal when the flow rate during the purge operation is below the predetermined flow rate. Otherwise, the flow rate detector may be provided in the recycle channel 4. In this case, the determination unit 11 determines that the purge operation is abnormal when the flow rate during the purge operation is equal to or more than the predetermined flow rate. In this way, having the same configuration as that of the fuel cell system 100 according to the first modification of the first embodiment, the fuel cell system 100 according to the second embodiment achieves the similar workings and effects.

The fuel cell system 100 according to the second embodiment may further include the concentration detector 31 that detects the hydrogen concentration of the anode off-gas like the fuel cell system 100 according to the second modification of the first embodiment does. The determination unit 11 determines that the purge operation is abnormal when the hydrogen concentration during the purge operation is below the predetermined concentration. In this way, having the same configuration as that of the fuel cell system 100 according to the second modification of the first embodiment, the fuel cell system 100 according to the second embodiment achieves the similar workings and effects.

### (Third Embodiment)

In the fuel cell system 100 according to the first embodiment, the operation (decreasing operation) is performed when the determination unit 11 determines that the purge operation is abnormal. On the other hand, in the fuel cell system 100 according to a third embodiment, when the determination unit 11 determines that the purge operation is abnormal, the decreasing operation is performed after the flow rate of the fuel gas supplied to the fuel cell 1 is increased. Other configurations, workings, and effects of the fuel cell system 100 according to the third embodiment are the same as those of the fuel cell system 100 according to the first embodiment; thus, descriptions thereof are omitted.

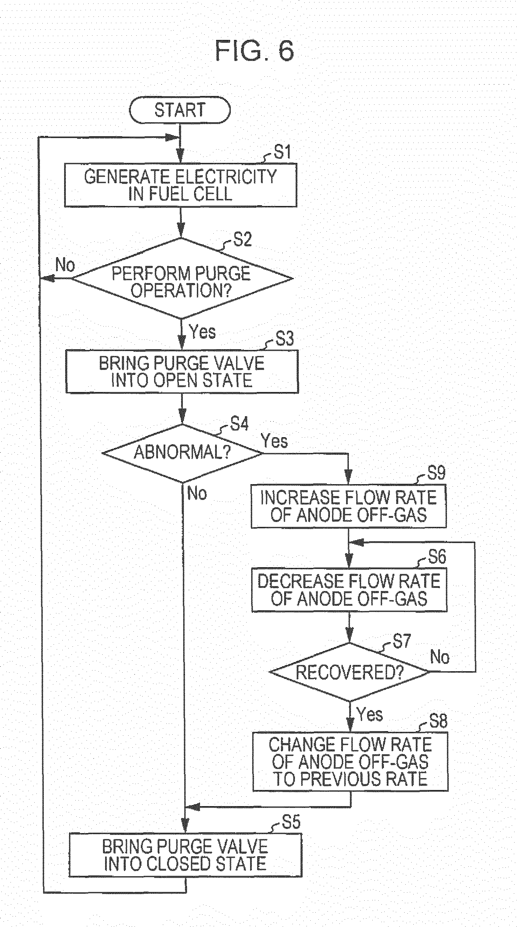

A method of operating the fuel cell system 100 is described with reference to Fig. 6. In the operation method illustrated in the flowchart of the Fig. 6, a process of step S6 is performed before the process of step S9 in the flowchart of Fig. 2. Other processes are the same as those in Fig. 2; thus, descriptions thereof are omitted.

In the process of step S4, when the determination unit 11 determines that the purge operation is abnormal (step S4: YES), the controller 12 raises the input voltage of the circulation pump 5 to increase the flow rate of the anode off-gas flowing through the recycle channel 4, thereby increasing the flow rate of the fuel gas supplied to the fuel cell 1. At that time, the flow rate of the anode off-gas is increased to the flow rate equal to or below the maximum flow rate of the range of the flow rate corresponding to the amount of the electricity generated in the fuel cell 1.

Subsequently, the controller 12 decreases the input voltage of the circulation pump 5 to decrease the flow rate of the anode off-gas (step S6). At that time, the flow rate of the anode off-gas is decreased to the flow rate equal to or below the minimum flow rate of the range of the flow rate corresponding to the amount of the electricity generated in the fuel cell 1.

In this way, increasing the flow rate of the anode off-gas before the decrease of the flow rate of the anode off-gas due to the decreasing operation further increases the pressure difference between the upstream side and the downstream side of the foreign substance. Thus, the force to remove the foreign substance is increased, and the foreign substance is further likely to be removed.

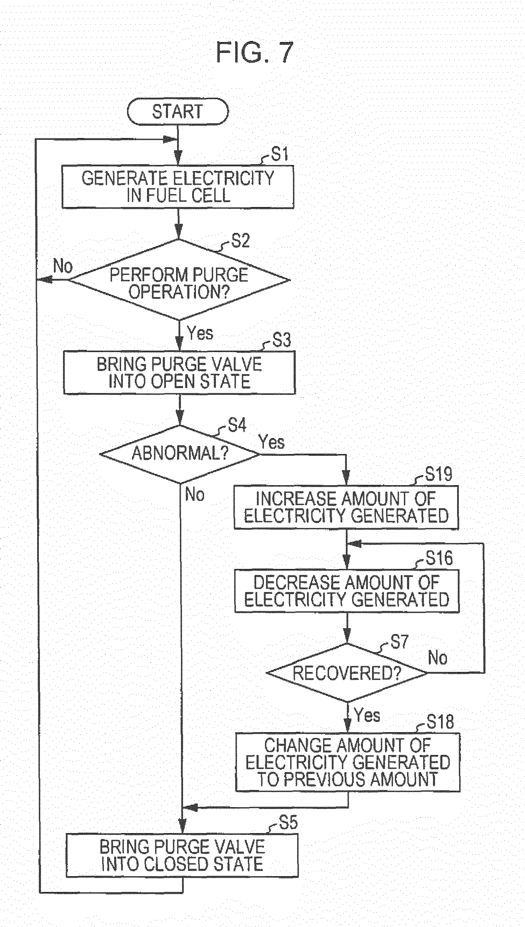

Also in the fuel cell system 100 according to the second embodiment, the decreasing operation may be performed after increasing the flow rate of the fuel gas supplied to the fuel cell 1 like the fuel cell system 100 according to the third embodiment does as illustrated in Fig. 7.

In this case, in the operation method illustrated in the flowchart of Fig. 7, a process of step S19 is performed before the process of the step S16 in the flowchart of Fig. 5. Other processes are the same as those in Fig. 5; thus, descriptions thereof are omitted. In the process of step S4, when the determination unit 11 determines that the purge operation is abnormal (step S4: YES), the controller 12 increases the amount of the electricity generated in the fuel cell 1. Thus, the flow rate of the fuel gas through the first supply channel 2 is increased in accordance with the amount of generated electricity. In this way, having the same configuration as that of the fuel cell system 100 according to the third embodiment, the fuel cell system 100 according to the second embodiment achieves the similar workings and effects.

The fuel cell system 100 according to the third embodiment may further include the flow rate detector 21 provided in one of the first supply channel 2 on the upstream side of the point connected with the recycle channel 4, and the first discharge channel 6 like the fuel cell system 100 according to the first modification of the first embodiment does. The determination unit 11 may determine that the purge operation is abnormal when the flow rate during the purge operation is below the predetermined flow rate. Otherwise, the flow rate detector may be provided in the recycle channel 4. In this case, the determination unit 11 determines that the purge operation is abnormal when the flow rate during the purge operation is equal to or more than the predetermined flow rate.

The fuel cell system 100 according to the third embodiment may further include the concentration detector 31 that detects the hydrogen concentration of the anode off-gas like the fuel cell system 100 according to the second modification of the first embodiment does. The determination unit 11 determines that the purge operation is abnormal when the hydrogen concentration during the purge operation is below the predetermined concentration.

### (Fourth Embodiment)

In the fuel cell system 100 according to the first embodiment, the decreasing operation is continued when the determination unit 11 determines that there is no recovery of the purge operation. On the other hand, in the fuel cell system 100 according to a fourth embodiment, when the determination unit 11 determines, after the decreasing operation, that the purge operation is abnormal, the controller 12 stops the fuel cell system 100. Other configurations, workings, and effects of the fuel cell system 100 according to the fourth embodiment are the same as those of the fuel cell system 100 according to the first embodiment; thus, descriptions thereof are omitted.

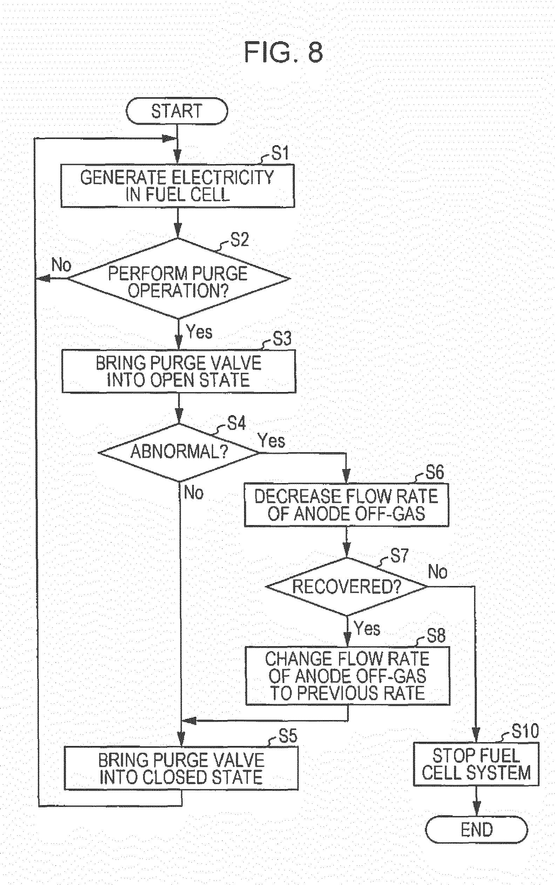

A method of operating the fuel cell system 100 is described with reference to Fig. 8. In the operation method illustrated in the flowchart of the Fig. 8, a process of step S10 is performed when the determination in step S7 in the flowchart of Fig. 2 is "NO." Other processes are the same as those in Fig. 2; thus, descriptions thereof are omitted.

In the process of step S7, when the determination unit 11 determines that the purge operation is not recovered even when the decreasing operation is performed (step S7: NO), the cause of the abnormality of the purge operation is considered to be some other than the clogging due to the foreign substance, that is, for example, failure of the purge valve 7. Thus, the controller 12 stops the fuel cell system 100 (step S10). In this way, stopping the fuel cell system 100 makes it possible to perform an appropriate action such as repair and replacement of the failed purge valve 7.

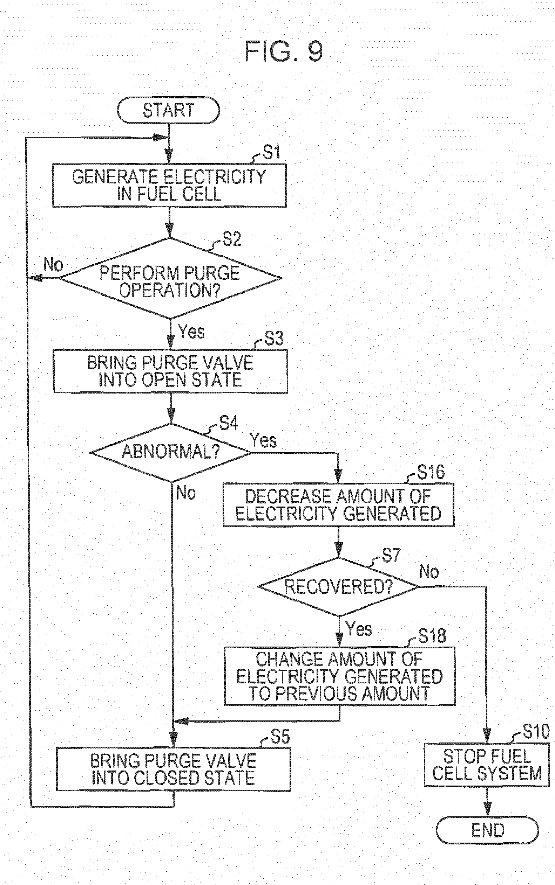

Also in the fuel cell system 100 according to the second embodiment, as illustrated in the flowchart of Fig. 9, when the determination unit 11 determines that the purge operation is not recovered (step S7: NO), the fuel cell system 100 may be stopped (step S10) like the fuel cell system 100 according to the fourth embodiment does. In this way, having the same configuration as that of the fuel cell system 100 according to the fourth embodiment, the fuel cell system 100 according to the second embodiment achieves the similar workings and effects.

Also in the fuel cell system 100 according to the third embodiment, when the determination unit 11 determines that the purge operation is not recovered, the fuel cell system 100 may be stopped like the fuel cell system 100 according to the fourth embodiment does.

The fuel cell system 100 according to the fourth embodiment may further include the flow rate detector 21 provided in one of the first supply channel 2 on the upstream side of the point connected with the recycle channel 4, and the first discharge channel 6 like the fuel cell system 100 according to the first modification of the first embodiment does. The determination unit 11 may determine that the purge operation is abnormal when the flow rate during the purge operation is below the predetermined flow rate. Otherwise, the flow rate detector may be provided in the recycle channel 4. In this case, the determination unit 11 determines that the purge operation is abnormal when the flow rate during the purge operation is equal to or more than the predetermined flow rate.

The fuel cell system 100 according to the fourth embodiment may further include the concentration detector 31 that detects the hydrogen concentration of the anode off-gas like the fuel cell system 100 according to the second modification of the first embodiment does. The determination unit 11 may determine that the purge operation is abnormal when the hydrogen concentration during the purge operation is below the predetermined concentration.

The above-described embodiments may be combined as long as none of them exclude others. From the above descriptions, many improvements and other embodiments of the present disclosure are manifest for those skilled in the art. Hence, the above descriptions should be understood as only an example, and the above descriptions are provided for teaching the best mode for implementing the present disclosure to those skilled in the art. Details of the configuration and/or the functions can be substantially changed without departing from the scope of the claimed invention.

The fuel cell system of the present disclosure is applicable as a fuel cell system capable of recovering a purge operation, for example.

## Claims

1. A fuel cell system, comprising:
a fuel cell (1) configured to generate electricity by an electrochemical reaction of a fuel gas supplied to an anode with an oxidant gas supplied to a cathode;
a supply channel (2) configured to supply the fuel gas to the anode;
a recycle channel (4) configured to supply an anode off-gas discharged from the anode to the supply channel (2);
a circulation pump (5) that is arranged in the recycle channel (4);
a discharge channel (6) that is connected to the recycle channel (4) between the anode and the circulation pump (5) and configured to discharge the anode off-gas to outside;
a purge valve (7) that is provided on the discharge channel (6);
a pressure adjuster (3) configured to adjust a pressure of the fuel gas flowing through the supply channel (2) to be constant; and
a controller (12), wherein:
the controller (12) is configured to determine whether a purge operation in which the purge valve (7) is brought into an open state to discharge the anode off-gas to the outside is abnormal, and
**characterized in that**
when the controller (12) determines that the purge operation is abnormal, the controller (12) is configured to perform a decreasing operation to decrease a flow rate of the fuel gas supplied to the anode.

2. The fuel cell system according to claim 1, wherein the decreasing operation includes an operation to decrease a flow rate of the anode off-gas flowing through the recycle channel (4) by using the circulation pump (5).

3. The fuel cell system according to claim 1, wherein the decreasing operation includes an operation to decrease an amount of the electricity generated in the fuel cell (1).

4. The fuel cell system according to claim 1, wherein when the controller (12) determines that the purge operation is abnormal, the controller (12) is configured to perform the decreasing operation after a flow rate of the fuel gas supplied to the fuel cell (1) is increased.

5. The fuel cell system according to claim 1, wherein when the controller (12) determines that the purge operation is abnormal after the decreasing operation is performed, the controller (12) is configured to stop the fuel cell system.

6. The fuel cell system according to claim 1 further comprising:
a voltage detector (1a) configured to detect a voltage of the generated electricity in the fuel cell (1), wherein
the controller (12) is configured to determine that the purge operation is abnormal when the voltage of the generated electricity during the purge operation is below a predetermined voltage.

7. The fuel cell system according to claim 1 further comprising:
a flow rate detector (21) configured to detect at least one of a flow rate of the fuel gas flowing through the supply channel (2) and a flow rate of the anode off-gas flowing through the discharge channel (6), wherein
the controller (12) is configured to determine that the purge operation is abnormal when the flow rate during the purge operation is below a predetermined flow rate.

8. The fuel cell system according to claim 1, wherein:
the fuel gas contains hydrogen,
the fuel cell system further comprises:
a concentration detector (31) configured to detect hydrogen concentration of the anode off-gas discharged to the outside, and
the controller (12) is configured to determine that the purge operation is abnormal when the hydrogen concentration during the purge operation is below a predetermined concentration.

9. The fuel cell system according to claim 1, wherein the pressure adjuster (3) is a governor.

## Patentansprüche

1. Brennstoffzellensystem, umfassend:
eine zum Erzeugen von Strom durch eine elektrochemische Reaktion eines einer Anode zugeführten Brennstoffgases mit einem einer Kathode zugeführten Oxidationsgas ausgebildete Brennstoffzelle (1);
einen zum Zuführen des Brennstoffgases zur Anode ausgebildeten Zuführungskanal (2);
einen zum Zuführen eines von der Anode freigesetzten Anodenabgases zum Zuführungskanal (2) ausgebildeten Rückführungskanal (4);
eine Umwälzpumpe (5), die im Rückführungskanal (4) angeordnet ist;
einen Abführkanal (6), der mit dem Rückführungskanal (4) zwischen der Anode und der Umwälzpumpe (5) verbunden und zum Abführen des Anodengases nach außen ausgebildet ist;
ein Ablassventil (7), das am Abführkanal (6) angeordnet ist;
einen zum Einstellen eines Drucks des durch den Zuführungskanal (2) strömenden Brennstoffgases, so dass dieser konstant ist, ausgebildeten Druckeinsteller (3); und
ein Steuergerät (12), wobei:
das Steuergerät (12) zum Bestimmen, ob ein Ablassvorgang, bei dem das Ablassventil (7) in einen offenen Zustand gebracht wird, um das Anodenabgas abzuführen, gestört ist, ausgebildet ist, und
**dadurch gekennzeichnet, dass,**
wenn das Steuergerät (12) bestimmt, dass der Ablassvorgang gestört ist, das Steuergerät (12) zum Durchführen eines Verringerungsvorgangs zum Verringern einer Durchflussrate des der Anode zugeführten Brennstoffgases ausgebildet ist.

2. Brennstoffzellensystem nach Anspruch 1, wobei der Verringerungsvorgang einen Vorgang zum Verringern einer Durchflussrate des durch den Rückführungskanals (4) strömenden Anodenabgases durch Verwendung der Umwälzpumpe (5) umfasst.

3. Brennstoffzellensystem nach Anspruch 1, wobei der Verringerungsvorgang einen Vorgang zum Verringern einer Menge des in der Brennstoffzelle (1) erzeugten Stroms umfasst.

4. Brennstoffzellensystem nach Anspruch 1, wobei, wenn das Steuergerät (12) bestimmt, dass der Ablassvorgang gestört ist, das Steuergerät (12) zum Durchführen des Verringerungsvorgangs, nachdem sich eine Durchflussrate des der Brennstoffzelle (1) zugeführten Brennstoffgases erhöht hat, ausgebildet ist.

5. Brennstoffzellensystem nach Anspruch 1, wobei, wenn das Steuergerät (12) bestimmt, dass der Ablassvorgang gestört ist, nachdem der Verringerungsvorgang durchgeführt wurde, das Steuergerät (12) zum Stoppen des Brennstoffzellensystems ausgebildet ist.

6. Brennstoffzellensystem nach Anspruch 1 ferner umfassend:
einen zum Erfassen einer Spannung des erzeugten Stroms in der Brennstoffzelle (1) ausgebildeten Spannungssensor (1a), wobei
das Steuergerät (12) zum Bestimmen, dass der Ablassvorgang gestört ist, wenn die Spannung des erzeugten Stroms während des Ablassvorgangs unterhalb einer vorgegebenen Spannung liegt, ausgebildet ist.

7. Brennstoffzellensystem nach Anspruch 1 ferner umfassend:
einen zum Erfassen einer Durchflussrate des durch den Zuführungskanal (2) strömenden Brennstoffgases oder/und einer Durchflussrate des durch den Abführkanal (6) strömenden Anodenabgases ausgebildeten Durchflussratensensor (21), wobei
das Steuergerät (12) zum Bestimmen, dass der Ablassvorgang gestört ist, wenn die Durchflussrate während des Ablassvorgangs unterhalb einer vorgegebenen Durchflussrate liegt, ausgebildet ist.

8. Brennstoffzellensystem nach Anspruch 1, wobei: das Brennstoffgas Wasserstoff enthält, das Brennstoffzellensystem ferner umfasst:
einen zum Erfassen der Wasserstoffkonzentration des nach außen abgeführten Anodenabgases ausgebildeten Konzentrationssensor (31), und
das Steuergerät (12) zum Bestimmen, dass der Ablassvorgang gestört ist, wenn die Wasserstoffkonzentration während des Ablassvorgangs unterhalb einer vorgegebenen Konzentration liegt, ausgebildet ist.

9. Brennstoffzellensystem nach Anspruch 1, wobei der Druckeinsteller (3) ein Regler ist.

## Revendications

1. Système de pile à combustible comprenant :
une pile à combustible (1) configurée pour générer de l'électricité par une réaction électrochimique d'un gaz combustible fourni à une anode avec un gaz oxydant fourni à une cathode ;
un canal d'alimentation (2) configuré pour fournir le gaz combustible à l'anode ;
un canal de recyclage (4) configuré pour fournir un effluent gazeux d'anode déchargé de l'anode vers le canal d'alimentation (2) ;
une pompe de circulation (5) qui est disposée dans le canal de recyclage (4) ;
un canal de décharge (6) qui est connecté au canal de recyclage (4) entre l'anode et la pompe de circulation (5) et configuré pour décharger l'effluent gazeux d'anode vers l'extérieur ;
une vanne de purge (7) qui est disposée sur le canal de décharge (6) ;
un ajusteur de pression (3) configuré pour ajuster une pression du gaz de combustible s'écoulant à travers le canal d'alimentation (2) pour qu'elle soit constante ; et
un contrôleur (12), dans lequel :
le contrôleur (12) est configuré pour déterminer si une opération de purge dans laquelle la vanne de purge (7) est amenée à un état d'ouverture pour décharger l'effluent gazeux d'anode vers l'extérieur est ou non anormale, et
**caractérisé en ce que**
lorsque le contrôleur (12) détermine que l'opération de purge est anormale, le contrôleur (12) est configuré pour effectuer une opération de diminution pour diminuer un débit du gaz combustible fourni à l'anode.

2. Le système de pile à combustible selon la revendication 1, dans lequel l'opération de diminution inclut une opération pour diminuer un débit de l'effluent gazeux d'anode s'écoulant à travers le canal de recyclage (4) en utilisant la pompe de circulation (5) .

3. Le système de pile à combustible selon la revendication 1, dans lequel l'opération de diminution inclut une opération pour diminuer une quantité de l'électricité générée dans la pile à combustible (1).

4. Le système de pile à combustible selon la revendication 1, dans lequel lorsque le contrôleur (12) détermine que l'opération de purge est anormale, le contrôleur (12) est configuré pour effectuer l'opération de diminution après qu'un débit du gaz combustible fourni à la pile à combustible (1) a augmenté.

5. Le système de pile à combustible selon la revendication 1, dans lequel lorsque le contrôleur (12) détermine que l'opération de purge est anormale après que l'opération de diminution a été effectuée, le contrôleur (12) est configuré pour arrêter le système de pile à combustible.

6. Le système de pile à combustible selon la revendication 1 comprenant en outre :
un détecteur de tension (la) configuré pour détecter une tension de l'électricité générée dans la pile à combustible (1), dans lequel
le contrôleur (12) est configuré pour déterminer que l'opération de purge est anormale lorsque la tension de l'électricité générée pendant l'opération de purge est inférieure à une tension prédéterminée.

7. Le système de pile à combustible selon la revendication 1 comprenant en outre :
un détecteur de débit (21) configuré pour détecter au moins un d'un débit du gaz combustible s'écoulant à travers le canal d'alimentation (2) et un débit de l'effluent gazeux d'anode s'écoulant à travers le canal de décharge (6), dans lequel
le contrôleur (12) est configuré pour déterminer que l'opération de purge est anormale lorsque le débit pendant l'opération de purge est inférieur à un débit prédéterminé.

8. Le système de pile à combustible selon la revendication 1, dans lequel :
le gaz combustible contient de l'hydrogène,
le système de pile à combustible comprend en outre :
un détecteur de concentration (31) configuré pour détecter une concentration d'hydrogène de l'effluent gazeux d'anode déchargé vers l'extérieur, et
le contrôleur (12) est configuré pour déterminer que l'opération de purge est anormale lorsque la concentration d'hydrogène pendant l'opération de purge est inférieure à une concentration prédéterminée.

9. Le système de pile à combustible selon la revendication 1, dans lequel l'ajusteur de pression (3) est un régulateur.
